# EUROPÄISCHE PATENTSCHRIFT

(11) **EP 3 685 414 B1**
(45) Veröffentlichungstag und Bekanntmachung des Hinweises auf die Patenterteilung: **11.11.2026**
(21) Anmeldenummer: 18769175.3
(22) Anmeldetag: 12.09.2018
(51) Int. Cl.: H01G 5/16, H01G 5/011, H01G 5/014, H01G 5/18

(54) **PLATTENKONDENSATOR MIT PLATTE AUS ELASTISCHEM WERKSTOFF**
PLATE CAPACITOR WITH PLATE MADE OF ELASTIC MATERIAL
CONDENSATEUR À PLAQUES AVEC PLAQUE À BASE DE MATERIAU ELASTIQUE

(30) Priorität: 21.09.2017 DE 102017216772
(43) Veröffentlichungstag der Anmeldung: 29.07.2020
(73) Patentinhaber: AUMOVIO Germany GmbH, 60488 Frankfurt am Main (DE)
(72) Erfinder: BEILKER, Dirk, 60598 Frankfurt (DE); SOMMER, Fabian, 63500 Seligenstadt (DE)
(74) Vertreter: Aumovio Corporation
(86) Internationale Anmeldenummer: PCT/EP2018/074595
(87) Internationale Veröffentlichungsnummer: WO 2019/057582

(56) Entgegenhaltungen:
- DE-A1- 2 513 785
- US-A- 3 693 059
- US-A- 3 993 939
- US-A- 4 016 466
- US-A1- 2007 039 147

## Beschreibung

Die Erfindung betrifft einen Plattenkondensator. Aus dem Stand der Technik sind Plattenkondensatoren bekannt, die zwei im Abstand zueinander befindliche elektrisch leitende Kondensatorplatten aufweisen. Solche Platenkondensatoren werden auch zu Messzwecken benutzt, indem man aus der Änderung der Kapazität des Plattenkondensators bei sich änderndem Abstand der Kondensatorplatten zueinander durch Messen der Kapazität des Plattenkondensators auf den Abstand der Kondensatorplatten zueinander schließen kann.

US 4016466 A, US 3993939 A, US 3693059 A, US 2007/039147 A1 und DE 25 13 785 A1 beschreiben flexible Plattenkondensatoren mit den Merkmalen des Oberbegriffs des Patentanspruchs 1. Die beschriebenen Plattenkondensatoren sind aufwändig aufgebaut.

Aufgabe der Erfindung ist es daher einen Plattenkondensator anzugeben, der einfach aufgebaut ist und für Wegmessungen verwendet werden kann. Diese Aufgabe wird gelöst durch einen Plattenkondensator mit den Merkmalen des Patentanspruchs 1.

Die elastische Kondensatorplatte liegt vorteilhafterweise im unbelasteten Zustand nur durch die elektrisch isolierende Schicht an der zweiten Kondensatorplatte an, so dass nur ein punktförmiger Bereich ( bei teilkugelförmiger Kondensatorplatte ) oder linienförmiger Bereich ( bei gewölbter Kondensatorplatte ) den kürzesten Abstand der ersten Kondensatorplatte zur zweiten Kondensatorplatte aufweist und so einen großen Einfluss auf die Kapazität des Plattenkondensators haben, während die sonstigen Bereiche der ersten Kondensatorplatte durch deren Wölbung weiter entfernt sind und zusätzlich die dann dazwischen liegende Luft als Dielektrikum so insgesamt weniger Einfluss auf die Kapazität des Plattenkondensators haben. Die letztgenannte Position ist vorteilhafterweise der größte Abstand zwischen den Kondensatorplatten, da ein weiterer Abstand durch die dann vorhanden Luft als Dielektrikum die Kapazität des Plattenkondensators bei zunehmendem Abstand der Kondensatorplatten nur gering ändern würde und für Messzwecke keine gute Genauigkeit der Messergebnisse liefern würde. Wenn jedoch die Position, wenn die erste Kondensatorplatte gerade die isolierende Schicht berührt als größter Abstand der beiden Kondensatorplatten zueinander gewählt wird, wird dann beim Verringern des Abstandes die wirksame Fläche der ersten Kondensatorplatte immer größer, so dass eine gute Genauigkeit der Messwerte ohne besonderen Aufwand erzielt werden kann. Bei einer teilkreisförmigen Ausgestaltung der ersten Kondensatorplatte verformt sich diese bei einer Verringerung des Abstandes des Halters zu der zweiten Kondensatorplatte und der Anteil der ersten Kondensatorplatte, der auf der isolierenden Schicht aufliegt, wird immer größer. Näherungsweise wird für den aufliegenden Teil der ersten Kondensatorplatte die Schnittfläche eines Kreises angenommen. Diese Fläche wächst proportional zur Verringerung des Abstandes des Halters zur zweiten Kondensatorplatte, bis die erste Kondensatorplatte vollständig auf der isolierenden Schicht aufliegt. Da der Abstand zwischen der zweiten Leiterplatte und den Anteilen der ersten Leiterplatte, die auf der elektrisch liegenden Isolierung aufliegen nun gleich bleibt ist die Kapazität linear abhängig von der aufliegenden Fläche der ersten Kondensatorplatte.

Die Ausgestaltung der gewölbten Form als Teilkugelform ist am einfachsten zu gestalten und gewährleistet am besten, dass das Verformen der gewölbten Form bei Annäherung der ersten Kondensatorplatte an die zweite Kondensatorplatte zu einer planen Auflage ohne Verwerfungen führt, so dass reproduzierbare Messergebnisse erhalten werden.

Bei Ausgestaltung der ersten Kondensatorplatte aus Leitgummi wird eine dauerhafte Funktion der ersten Leiterplatte erhalten.

Erfindungsgemäß geht die erste Kondensatorplatte in einen Übergangsbereich über, mittels dem die erste Kondensatorplatte gehalten ist, so dass die erste kondensatorplatte besonders gut gehalten werden kann. Die hohlzylindrische Form des Übergangsbereich ist hierbei über den zylindrischen Teil des Halters gezogen.

Dies kann besonders gut dadurch realisiert werden, dass der Übergangsbereich über dem Halter verspannt und/oder mit dem Halter verklebt ist. Eine Verspannung lässt sich besonders einfach realisieren, wenn der Übergangsbereich Teile des Halters umschließt. Der Übergangsbereich kann auch in dem Halter eingespannt oder mit dem Halter verklebt sein.

Erfindungsgemäß weist der Übergangsbereich eine hohlzylindrische Form und der Halter eine zylindrische Form auf und wird die hohlzylindrische Form des Übergangsbereichs über den zylindrischen Teil gezogen und vorteilhafterweise so verspannt, insbesondere wenn der Innendurchmesser des Hohlzylinders etwas kleiner ist als der Außendurchmesser des Zylinders.

Wenn der Halter aus Metall besteht oder mit einer metallischen Beschichtung versehen ist, kann die erste Kondensatorplatte bei einer Ausgestaltung der ersten Kondensatorplatte aus Leitgummi oder einer metallischen Beschichtung leicht elektrisch verbunden werden.

Wenn die zweite Kondensatorplatte auf einer Leiterplatte angeordnet ist, ist sie besonders einfach dadurch herstellbar, dass sie beim Herstellen der Leiterplatte mittels üblicher Herstelltechniken von Leiterplatten aus dem Leitermaterial der Leiter der Leiterplatte in einem Arbeitsgang mit den Leitern hergestellt wird. Die zweite Kondensatorplatte kann auch durch eine separate elektrisch leitende Platte hergestellt sein, die auf einer Leiterplatte oder in sonstiger Weise angeordnet ist.

Wenn der Plattenkondensator eine verformbare Tülle aufweist, die sich von dem Ende der gewölbten Form oder vom Übergangsbereich bis zur Leiterplatte erstreckt und auf dieser aufliegt, kann der Plattenkondensator wirksam vor Umwelteinflüssen geschützt werden.

Wenn die elektrisch isolierende Schicht auf der zweiten Kondensatorplatte angeordnet ist wird eine besonders dauerhafte Ausgestaltung gewählt, da die Schicht mechanisch nicht bewegt wird. Grundsätzlich ist eine Ausgestaltung der elektrisch isolierenden Schicht auch auf der ersten Kondensatorplatte benachbart zur zweiten Kondensatorplatte möglich.

Der Plattenkondensator kann gut als Teil einer Vorrichtung zur Abstandsmessung oder Druckmessung eingesetzt werden.

Die Erfindung wird nachfolgend anhand der Figuren näher erläutert.

Es zeigen:
- Figur 1: einen Schnitt durch ein besonders bevorzugtes Ausführungsbeispiel der Erfindung in einer ersten Endstellung
- Figur 2: den Ausschnitt A aus Figur 1
- Figur 3: den Schnitt durch das Ausführungsbeispiel aus Figur 1 in einer Zwischenstellung
- Figur 4: den Schnitt durch das Ausführungsbeispiel aus Figuren 1 und 3 in einer zweiten Endstellung

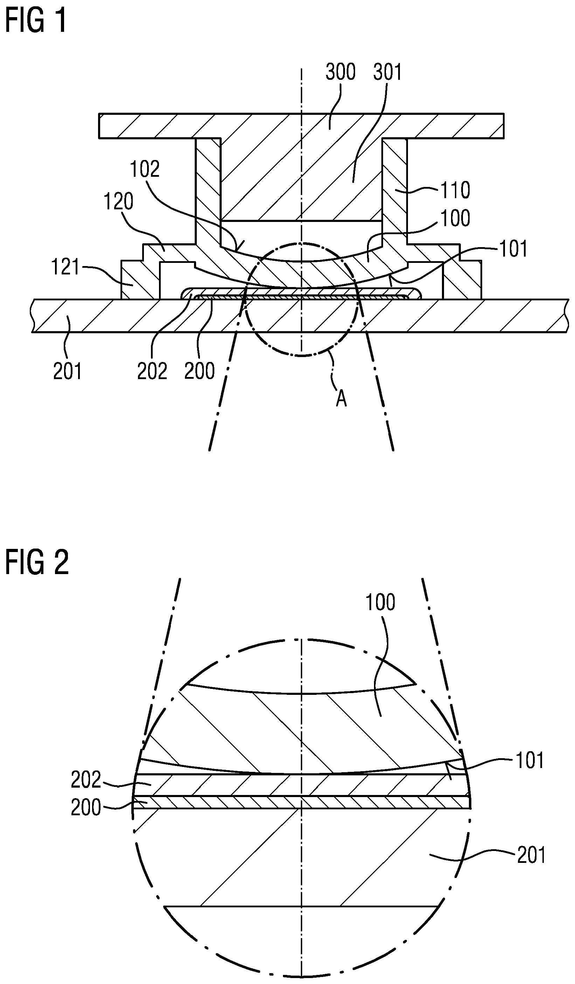

In Figur 1 erkennt man eine erste Kondensatorplatte 100 mit erster Oberfläche 101 und zweite Oberfläche 102, eine zweite Kondensatorplatte 200, die auf einer Leiterplatte 201 angeordnet und mit einer elektrisch isolierenden Schicht 202 überzogen ist und einen Halter 300. Die erste Kondensatorplatte 100 weist eine Teilkugelform auf und geht in einen Übergangsbereich 110 über. Weiterhin ist mit der ersten Kondensatorplatte 100 eine Tülle 120 einstückig ausgebildet, die sich vom Übergangsbereich 110 bis zur Leiterplatte 201 erstreckt und so verhindert, dass Schmutz oder Feuchtigkeit zwischen die beiden Kondensatorplatten 100, 200 gelangen kann und so die Funktionsweise des Plattenkondensators nicht beeinträchtigt wird. Der Übergangsbereich 110 ist hohlzylinderförmig ausgestaltet und ist über einen zylindrischen Teil 301 des Halters 300 geschoben, wobei der Innendurchmesser des Übergangsbereichs 110 im nicht montierten Zustand etwas kleiner ist als der Durchmesser des zylindrischen Teils 301, so dass der Übergangsbereich 110 im in Figur 1 dargestellten montiertem Zustand über dem zylindrischen Teil 301 verspannt ist. Eine dauerhafte Verbindung zwischen dem Halter 300 kann auch durch andere bekannte Verbindungstechniken erfolgen, wie beispielsweise Verkleben oder Einspannen.

Die zweite Kondensatorplatte 200 ist aus dem Material hergestellt, aus dem auch nicht dargestellte Leiterbahnen der Leiterplatte 201 bestehen. So kann sie gleichzeitig mit der Leiterplatte hergestellt werden. Es ist auch möglich, die zweite Kondensatorplatte 200 in anderer Weise herzustellen. Als elektrisch isolierende Schicht 202 kann ein Lötstopplack verwendet werden und so die Herstellung weiter vereinfacht werden, da dieser Lötstopplack spätestens vor einer Montage von sonstigen elektrischen oder elektronischen Bauteilen auf die Leiterplatte 201 aufgetragen wird. Grundsätzlich ist es auch möglich, die isolierende Schicht auf die erste Oberfläche 101 der ersten Kondensatorplatte 100 aufzutragen. Durch die ständige Verformung der ersten Kondensatorplatte 100 erscheint ein Aufbringen der isolierenden Schicht auf der zweiten Kondensatorplatte 200 als die dauerhaftere Lösung. Der Halter 300 ist samt zylindrischem Teil 301 vorteilhafterweise aus Metall hergestellt, da dann bei einer Ausgestaltung der ersten Kondensatorplatte 100 aus Leitgummi die die erste Kondensatorplatte 100 elektrisch leitend mit dem Halter 300 verbunden ist und so die erste Kondensatorplatte leicht mit einer nicht dargestellten Auswerteelektronik elektrisch verbunden werden kann, wobei die Auswerteelektronik auf der Leiterplatte 201 montiert sein kann und so auch einfach mit der zweiten Kondensatorplatte 200 verbunden werden kann. Die erste Kondensatorplatte 100 kann auch durch ein elektrisch nicht leitfähiges elastisches Material hergestellt sein, welches mit einem metallischen Überzug vollständig oder teilweise versehen sein kann, der dann die Funktion der ersten Leiterplatte übernimmt. Wenn diese metallische Beschichtung auf der auf der zweiten (inneren) Seite 102 erfolgte, hätte das in Figur 1 dargestellte Bauteil 100 die Funktion einer isolierenden Schicht, so dass auf die dann zusätzliche elektrisch isolierende Schicht 201 verzichtet werden könnte. Die metallische Beschichtung könnte beispielsweise mäanderförmig ausgestaltet sein, um die Haltbarkeit der Verbindung zwischen der Beschichtung und dem elastischen Bauteil zu erhöhen.

Die Tülle 120 weist vorteilhafterweise im Bereich der Leiterplatte 201 einen Fuß 121 auf, der ringförmig ausgestaltet ist und auf der Leiterplatte 201 aufliegt.

In Figur 2 erkennt man, dass die erste Kondensatorplatte 100 die elektrisch isolierende Schicht 202 gerade berührt und noch die teilkugelförmige Form aufweist.

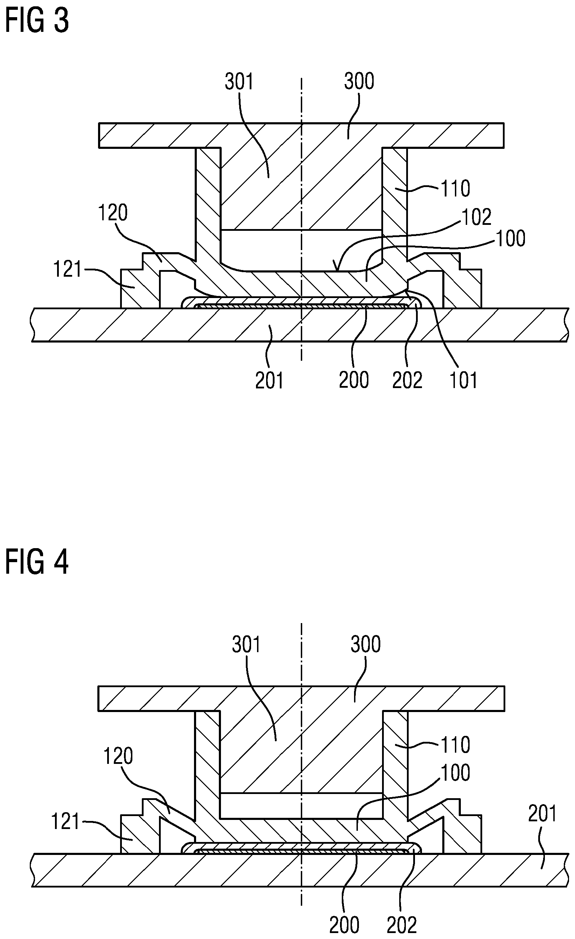

In Figur 3 ist der Halter 300 gegenüber der in den Figuren 1 und 2 dargestellten ersten Endstellung näher an die zweite Leiterplatte 201 verschoben. Deshalb liegt die erste Kondensatorplatte 100 teilweise eingedrückt und liegt teilweise auf der elektrisch isolierenden Schicht 202 plan auf, während nur noch der äußere Bereich der ersten Kondensatorplatte 100 eine Wölbung aufweist. Die Tülle 120 ist entsprechend verformt und der Fuß 121 der Tülle 120 liegt auf der Leiterplatte 201 auf.

In Figur 4 ist der Halter 300 in seiner zweiten Endstellung dargestellt, so dass die erste Leiterplatte 100 mit ihrer ersten Oberfläche 101 vollständig auf der isolierenden Schicht 202 aufliegt und so die Kapazität des Plattenkondensators mit den Leiterplatten 100, 200 am größten ist. Grundsätzlich ist festzustellen, dass sich die Kapazität linear mit dem Abstand des Halters von der Leiterplatte ändert. Durch ein genaues Ausmessen der bei bestimmten Positionen vorhandenen Kapazität und Abspeichern in einer Tabelle kann die Genauigkeit der Abstandsmessung weiter erhöht werden, wenn zu den gemessenen Kapazitätswerten die entsprechenden in der Tabelle zugeordneten Abstände zugeordnet werden. Für zwischen den abgespeicherten Kapazitäten liegende Werte können die Abstandswerte durch Interpolation ermittelt werden.

In Figur 4 ist der Halter 300 in seiner zweiten Endposition. Der erste Plattenkondensator 100 liegt mit seiner ersten Oberfläche 101 vollständig auf der elektrisch isolierenden Schicht 202 auf, so dass die Kapazität des Plattenkondensators am größten ist. Der Fuß 121 der Tülle 120 liegt weiterhin auf der Leiterplatte auf.

In der vorliegenden Beschreibung wurden der Halter 300 und die Leiterplatte 201 als Bezugsgrößen genommen, da diese in dem vorliegenden Ausführungsbeispiel die Lageänderung einer Wegmessung am anschaulichsten beschreiben. Es wäre z.B. auch möglich, den Abstand der zweiten Kondensatorplatte und einem sich nicht elastisch verbiegenden Teil der ersten Kondensatorplatte oder des Übergangsbereichs zu nehmen.

## Patentansprüche

1. Plattenkondensator mit einer ersten Kondensatorplatte (100), die im Abstand zu einer zweiten Kondensatorplatte (200) angeordnet ist, wobei die erste Kondensatorplatte (100) aus einem elastischem Werkstoff hergestellt ist und im unbelasteten Zustand eine gewölbte Form aufweist, die erste Kondensatorplatte (100) von einem Halter (300) gehalten ist, der elastische Werkstoff elektrisch leitend oder mit einer elektrisch leitenden Schicht versehen ist, und wobei zwischen der ersten und zweiten Kondensatorplatte (100, 200) eine elektrisch isolierende Schicht (202) angeordnet ist,
**dadurch gekennzeichnet, dass** die erste Kondensatorplatte (100) in einen Übergangsbereich (110) übergeht, mittels dem die erste Kondensatorplatte (100) gehalten ist, dass der Übergangsbereich (110) über dem Halter (300) verspannt und/oder mit dem Halter (300) verklebt ist, dass der Übergangsbereich (110) eine hohlzylindrische Form aufweist, und dass der Halter (300) ein zylindrisches Teil (301) aufweist und die hohlzylindrische Form des Übergangsbereichs (110) über den zylindrischen Teil (301) des Halters (300) gezogen ist.

2. Plattenkondensator nach Patentanspruch 1, **dadurch gekennzeichnet, dass** die gewölbte Form eine Teilkugelform aufweist

3. Plattenkondensator nach einem der vorstehenden Patentansprüche, **dadurch gekennzeichnet, dass** der elektrisch leitfähige Werkstoff Leitgummi ist.

4. Plattenkondensator nach einem der vorstehenden Patentansprüche, **dadurch gekennzeichnet, dass** der Halter (300, 301) aus Metall besteht oder mit einer metallischen Beschichtung versehen ist.

5. Plattenkondensator nach einem der vorstehenden Patentansprüche, **dadurch gekennzeichnet, dass** die zweite Kondensatorplatte (200) auf einer Leiterplatte (201) angeordnet ist und dass der Plattenkondensator eine verformbare Tülle (120) aufweist, die sich von dem Ende der gewölbten Form oder vom Übergangsbereich (110) bis zur Leiterplatte (201) erstreckt und auf der Leiterplatte (201) aufliegt.

6. Platenkondensator nach einem der vorstehenden Patentansprüche, **dadurch gekennzeichnet, dass** die elektrisch isolierende Schicht (202) auf der zweiten Kondensatorplatte (200) angeordnet ist.

7. Vorrichtung zur Abstandsmessung, **dadurch gekennzeichnet, dass** sie einen Plattenkondensator nach einem der vorstehenden Patentansprüche aufweist.

## Claims

1. Plate capacitor comprising a first capacitor plate (100) arranged at a distance from a second capacitor plate (200), wherein the first capacitor plate (100) is produced from an elastic material and has a curved shape in the unloaded state, the first capacitor plate (100) is held by a holder (300), the elastic material is electrically conductive or provided with an electrically conductive layer, and wherein an electrically insulating layer (202) is arranged between the first and second capacitor plates (100, 200), **characterized in that** the first capacitor plate (100) merges into a transition region (110) by means of which the first capacitor plate (100) is held, **in that** the transition region (110) is clamped over the holder (300) and/or adhesively bonded to the holder (300), **in that** the transition region (110) has a hollow-cylindrical shape, and **in that** the holder (300) has a cylindrical part (301) and the hollow-cylindrical shape of the transition region (110) is pulled over the cylindrical part (301) of the holder (300).

2. Plate capacitor according to Patent Claim 1, **characterized in that** the curved shape has a partially spherical shape.

3. Plate capacitor according to either of the preceding patent claims, **characterized in that** the electrically conductive material is conductive rubber.

4. Plate capacitor according to any of the preceding patent claims, **characterized in that** the holder (300, 301) consists of metal or is provided with a metallic coating.

5. Plate capacitor according to any of the preceding patent claims, **characterized in that** the second capacitor plate (200) is arranged on a printed circuit board (201) and **in that** the plate capacitor has a deformable sleeve (120) which extends from the end of the curved shape or from the transition region (110) to the printed circuit board (201) and rests on the printed circuit board (201).

6. Plate capacitor according to any of the preceding patent claims, **characterized in that** the electrically insulating layer (202) is arranged on the second capacitor plate (200).

7. Device for distance measurement, **characterized in that** it has a plate capacitor according to any of the preceding patent claims.

## Revendications

1. Condensateur à plaques avec une première plaque de condensateur (100), qui est disposée à distance d'une deuxième plaque de condensateur (200), la première plaque de condensateur (100) étant fabriquée à partir d'un matériau élastique et comportant une forme bombée dans l'état non chargé, la première plaque de condensateur (100) étant maintenue par un support (300), le matériau élastique est électriquement conducteur ou pourvu d'une couche électriquement conductrice, et une couche électriquement isolante (202) étant disposée entre la première et la deuxième plaque de condensateur (100, 200), **caractérisé en ce que** la première plaque de condensateur (100) passe dans une zone de transition (110) au moyen de laquelle la première plaque de condensateur (100) est maintenue, que la zone de transition (110) est serrée par le support (300) et/ou est collée au support (300), que la zone de transition (110) comporte une forme cylindrique creuse, et que le support (300) comporte une partie cylindrique (301) et la forme cylindrique creuse de la zone de transition (110) est tirée sur la partie cylindrique (301) du support (300).

2. Condensateur à plaques selon la revendication 1, **caractérisé en ce que** la forme bombée comporte une forme partiellement sphérique.

3. Condensateur à plaques selon l'une des revendications précédentes, **caractérisé en ce que** le matériau électriquement conducteur est du caoutchouc conducteur.

4. Condensateur à plaques selon l'une des revendications précédentes, **caractérisé en ce que** le support (300, 301) est constitué de métal ou est pourvu d'un revêtement métallique.

5. Condensateur à plaques selon l'une des revendications précédentes, **caractérisé en ce que** la deuxième plaque de condensateur (200) est disposée sur une carte de circuits imprimés (201) et que le condensateur à plaques comporte un bec (120) déformable, qui s'étend depuis l'extrémité de la forme bombée ou de la zone de transition (110) jusqu'à la carte de circuits imprimés (201) et repose sur la carte de circuits imprimés (201).

6. Condensateur à plaques selon l'une des revendications précédentes, **caractérisé en ce que** la couche électriquement isolante (202) est disposée sur la deuxième plaque de condensateur (200).

7. Dispositif de mesure de distance, **caractérisé en ce qu'**il comporte un condensateur plaques selon l'une des revendications précédentes.
